(19) 

**Europäisches Patentamt**

**European Patent Office**

**Office européen des brevets**

(11) **EP 4 380 035 A1**

(12) **EUROPEAN PATENT APPLICATION**

(43) Date of publication:
**05.06.2024 Bulletin 2024/23**

(21) Application number: **22210534.8**

(22) Date of filing: **30.11.2022**

(51) International Patent Classification (IPC):
**H02M 7/5395** *(2006.01)* **H02M 1/00** *(2006.01)*
**H02M 7/487** *(2007.01)*

(52) Cooperative Patent Classification (CPC):
**H02M 7/487; H02M 1/0012; H02M 1/0016;**
**H02M 1/0054; H02M 7/5395**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
• **Leppänen, Veli-Matti
  00380 Helsinki (FI)**
• **Muszynski, Peter
  00380 Helsinki (FI)**

(74) Representative: **Kolster Oy Ab
Salmisaarenaukio 1
P.O. Box 204
00181 Helsinki (FI)**

(54) **CONTROL APPARATUS FOR AN ARCP INVERTER**

(57)   A control apparatus for ARCP (Auxiliary Resonant Commuted Pole) power inverters comprises a modulator and a modulation control (70). The modulator is configured to carry out a commutation of an ARCP inverter by selectively using a Continuous PWM (CPWM) modulation and a Discontinuous PWM (DPWM) modulation. The modulation control (76) is configured to dynamically select (76) either the CPWM modulation or the DPWM modulation in a such a way that switching losses of the ARCP inverter are reduced while a failure of the commutation of the ARCP inverter due to a neutral point voltage unbalance of the ARCP inverter is avoided.

**Fig. 8**

$f_0/CTRL_{ref}/U^*$ → | 72 | 70 | 74 | ← $U_{NP}/\Delta U_{NP}/U_1/U_2$

**Modulation control**

$f_c/CTRL_{carrier}$ → | 73 | 76 | 75 | ← $I_o/I_{bA}$

↓ **CPWM/DPWM selection**

**EP 4 380 035 A1**

## Description

FIELD OF THE INVENTION

The present invention relates to a soft switching power inverter, and more particularly to ARCP (Auxiliary Resonant Commuted Pole) power inverters.

BACKGROUND OF THE INVENTION

A dc-ac converter, also known as an inverter, converts dc power to ac power at desired output voltage and output frequency. The inverter therefore can be operated as an adjustable-frequency voltage source. The dc power input to the inverter may be obtained from an existing power supply network through a rectifier or from a battery, fuel cell, photovoltaic array, etc. The filter capacitor(s) across the input terminals of the inverter provides a fairly constant dc-link voltage. A configuration of ac to dc converter and dc to ac inverter may be called a dc-link converter.

Pulse-width-modulation (PWM) inverters are widely used in motor drives, uninterruptible power supplies (UPSs), and utility interfaces. Inverter switching components may be simple electronic switches, usually consisting of three terminals or pins, in which the presence of a voltage or current in one terminal allows current to flow between the other two terminals. The inverter switches operate in a switch mode, meaning that that they are controlled to transition from a blocking state (OFF state) to a conducting state (ON state), and vice-versa, by providing control pulses at a high switching frequency $f_c$, also called a carrier frequency. In a PWM modulation scheme, the width of control pulses provided to the control inputs of the switching devices is varied in proportion to the amplitude and frequency $f_o$ of a (e.g., sinusoidal) reference signal. The frequency $f_o$ of the reference signal determines the output frequency $f_o$ of the inverter on the AC side. In the blocking state, the voltage drop across the switch is at a maximum, while the current through the switch, however, due to the blocking state, is ideally zero. In the conductive state, the current that flows through the switch is at a maximum, but the voltage drop across the switch is minimal, ideally zero. However, electronic switching devices have a finite switching time, i.e. they they cannot instantly switch from the conductive to the blocking state and vice versa. During this transition interval (commutation), the switch neither completely blocks nor fully conducts, and therefore, neither the voltage across the switch nor the current through the switch is zero. In other words, there is a considerable overlap between voltage and current waveforms. This simultaneous presence of voltage across the switch and current through it means that, during this overlapping period, power is being dissipated within the device. This power loss, called "a switching loss", reduces efficiency of the inverter, and when dissipated in the switch causes a major thermal stress on the switching device. The ability of a switching device to remove heat is limited. As the heat load increases, temperature rises which, in turn, degrades performance.

Conventional PWM inverters are operated under such "hard switching" conditions, where the voltages across the switches and currents through the switches are changed abruptly from high values to zero and vice versa at a high switching frequency $f_s$, with an overlap between the voltage and current waveforms, causing switching losses and generating a substantial amount of electromagnetic interference. The switching losses are proportional to the switching frequency $f_s$ and thereby limit the maximum switching frequency. A high level of EMI is caused due to a wide spectrum of harmonics contained in rectangular PWM waveforms.

To reduce the stress on the devices used for switches and limit EMI, it is previously known to use so-called snubber capacitors connected in parallel with switches. The goal of a snubber capacitor is to provide zero voltage during device turn-off until the current dies off. When the switch is turned off the current will drop at a rate determined by the fall time of the device, and the voltage will rise as the snubber capacitor begins to charge. With the snubber capacitor in the circuit, the voltage rise is slower than the current fall off (depending on the value of the capacitor) and the energy lost in the switch is smaller than without the snubber. During device turn-on the snubber tries to maintain a zero current while the voltage drops off to zero. In this way current and voltage are not present in the switch simultaneously and thus ideally no power is lost in the switch. Additionally, snubbers limit the di/dt and dv/dt of the switches which reduces the EMI emissions. The energy stored in the snubber capacitor after turn-off is dissipated in an associated resistor when the switch is turned on, thus the snubber does not improve the overall efficiency of the circuit but simply limits the stress on the switching device.

In a conventional PWM inverter, a so-called continuous PWM (CPWM) method is used, wherein waveforms which are generated with the intention that switching occurs in each carrier signal cycle throughout each (e.g., sinusoidal) reference signal cycle (period) in each phase participating to PWM. In other words, pulse width modulation is intended to be continuous throughout the reference signal cycle, hence the term "continuous" PWM.

Discontinuous pulse width modulation (DPWM) is a further method of reducing switching losses in the inverter by decreasing the number of switching operations in comparison to the CPWM. To this end, the PWM modulation is discontinued (hence the term "discontinuous" PWM), i.e. switching does not occur, during a predetermined portion or range of each reference signal cycle, by clamping the PWM modulating signal to upper or lower DC -link rail so that the switching device is maintained in ON or OFF state during this range. Most often the PWM is discontinued in a 60-degree range, i.e., the the switches of the inverter do not switch during a one-third range of the reference signal cycle. As a result, the number of switching operations in each reference signal cycle can be decreased by approximately one third, and switching losses can decrease by 25%-50% depending on the power factor. Further, the discontinuous pulse width modulation methods may use carrier signal into which the switching events are operationally synchronized. Thus, terms carrier frequency ($f_c$) and carrier period ($T_c = 1/f_c$) are applicable to DPWM methods as well, regardless of the method how pulse lengths are obtained.

Soft-switching techniques aim to eliminate the switching losses by forcing a zero-voltage or a zero-current condition on the switch during a switching event. Switching at zero-voltage crossing is called zero-voltage switching (ZVS) whereas switching at zero-current crossing is called zero-current switching (ZCS). While soft-switching has been successfully applied for simpler applications such as DC-DC converters, it has been difficult to apply to general-purpose inverters (such as to drive AC motors). The auxiliary resonant commutated pole (ARCP) topology is one of the most promising approaches for soft-switching inverters and has distinct potential benefits in a motor drive application. The output voltage wave form during commutation can be shaped to be motor friendly via suitable resonant circuit parameter selections. The stress in motor insulation and bearings is thus reduced. The basic configuration and operation of ARCP is described, for example, an article "The auxiliary resonant commutated pole converter", IEEE-IAS Conference Proceedings 1990, pp. 1228-35, and in US5047913 by R. W. De Doncker et al. The ARCP inverter comprises series-connected dc-link capacitances of equal size between the negative (N) and the positive (P) dc-link rails of the dc-link side of the inverter. At a center tap, called a neutral point (NP), of capacitances there is provided a neutral point voltage or potential $U_{NP}$ that essentially corresponds to half of the voltage $U_{dc}$ between the dc rails. Across each main switching device of the inverter are connected an antiparallel diode and a resonant capacitor. Further, an auxiliary circuit comprising a resonant inductor and auxiliary switching device(s) is connected between the neutral point and a phase output. The difference between an ARCP inverter and a hard-switched inverter lies in the commutation between states. In the ARCP commutation is accomplished through the auxiliary circuitry in a finite amount of time. The auxiliary circuit is only used when the output is required to commutate from one voltage rail to the other. In order to ensure that the inverter output voltage at least reaches the positive and negative dc rail voltages during each resonant commutation cycle, a boost current is added to the resonant current by appropriately controlling the conduction times of the auxiliary switching devices and the main switching devices. A predetermined boost current level in the inductor adds sufficient energy to the resonant operation to ensure that the output voltage attempts to overshoot the respective converter antiparallel diode and clamping the output voltage to the respective rail voltage. Ideally, the main switches turn on and off in a zero-voltage condition, and the auxiliary switch(es) in zero-current condition, which reduce the occurring switching losses. Consequently, the switching frequency can be increased without a considerable loss penalty. Low acoustic noise of such a drive is appreciated in many applications. High switching frequency also enables higher fundamental output frequencies with low distortion, making the ARCP topology attractive for high-speed drive applications.

The currents through the auxiliary circuit tend to displace the neutral point potential, i.e., cause a neutral point voltage unbalance $\Delta U_{NP}$, or more specifically, difference or unbalance between the voltages across the dc-link capacitances. The perfect balance would mean that the voltages are equal and the difference or unbalance $\Delta U_{NP} = 0$. Each commutation in each phase either sink or source current through the auxiliary circuit to the neutral point *NP,* and there tends to be ripple in $\Delta U_{NP}$ during normal operation even if the dc-link voltage was constant. In a continuous PWM modulation, the basic operation of the ARCP contributes a mean value of the potential difference or unbalance $\Delta U_{NP}$ to become zero or close to zero in each carrier cycle of modulation. However, the NP potential $U_{NP}$ will in practice drift towards the N or P potential due to, for instance, unbalance in the phase current, parameter variations in the components of the inverter or in the control of the inverter. The unbalance of the NP potential $\Delta U_{NP}$, on the other hand, may for instance result in the voltage across the main switch turned on during a commutation process never reaching the value zero, which in its turn results in increased turn-on losses and in worst case in destruction of switching device. Generally, robust and safe commutations require that neutral point potential $U_{NP}$ in the dc-link stays substantially stable. Therefore, various methods to control the NP potential unbalance $\Delta U_{NP}$ have been proposed, for example in EP1407533B1, US6205040B1, US6278626B1, and EP3923460A1.

Prior art ARCP inverters support only the sinusoidal continuous PWM (CPWM), although using discontinuous PWM (DPWM) with ARCP could result in lower switching losses. This choice may have been due to the significant NP voltage unbalance with DPWM and the related challenges for robustly and efficiently controlling ARCP commutations.

SUMMARY OF THE DISCLOSURE

An object of embodiments of the invention is to enable using discontinuous pulse width modulation (DPWM) with an auxiliary resonant commuted pole (ARCP) inverter, while ensuring a robust and efficient ARCP commutation. The object is achieved by a control apparatus and an ARCP inverter device according to the independent claims. Embodiments of the invention are disclosed in the dependent claims.

An aspect of the invention is a control apparatus, comprising

a modulator configured to carry out a commutation of an auxiliary resonant commutated pole (ARCP) inverter by a pulse width modulation (PWM) technique, wherein the modulator can use a Continuous PWM (CPWM) modulation and a Discontinuous PWM (DPWM) modulation for the commutation of the ARCP inverter, and

a modulation control configured to dynamically select either the CPWM modulation or the DPWM modulation in a such a way that switching losses of the ARCP inverter are reduced while a failure of the commutation of the ARCP inverter due to a neutral point voltage unbalance of the ARCP inverter is avoided.

In an embodiment, the modulation control is configured to select the DPWM modulation, if the neutral point voltage unbalance resulting from the DPWM modulation is estimated to not cause a failure of the commutation of the ARCP inverter, and the modulation control is configured to select the CPWM modulation for the commutation, if the neutral point voltage unbalance resulting from the DPWM modulation is estimated to cause a failure of the commutation of the ARCP inverter.

In an embodiment, the modulation control is configured to select the DPWM modulation, if the neutral point voltage unbalance resulting from the DPWM modulation is estimated to be sufficiently low for a successful commutation, and the modulation control is configured to select the CPWM modulation for the commutation, if the neutral point voltage unbalance resulting from the DPWM modulation is estimated to be excessively high for a successful commutation.

In an embodiment, the modulation control is configured to monitor one or more unbalance metrics directly or inversely proportional to a neutral point voltage unbalance of the ARCP inverter, preferably to a neutral point unbalance voltage ripple of the ARCP inverter, and the modulation control is configured to compare the monitored unbalance metrics with one or more threshold parameters, preferably with hysteresis, and to dynamically select the CPWM modulation or the DWPM modulation based on a result of the comparison.

In an embodiment, the unbalance metrics include a fundamental output frequency of the ARCP inverter, and wherein the modulation control is configured to dynamically select the DPWM modulation for the commutation, when the fundamental output frequency of the ARCP inverter is higher than the threshold parameter, and the modulation control is configured to select the CPWM modulation for the commutation when the output frequency of the ARCP inverter is lower than the threshold parameter, wherein the threshold parameter represents an absolute frequency value or a percentage of a frequency range.

In an embodiment, the unbalance metrics include a ratio $f_c/f_o$, wherein $f_c$ is a carrier frequency of the ARCP inverter, $f_o$ is a fundamental output frequency of the ARCP inverter, and the modulation control is configured to dynamically select the DPWM modulation for the commutation, when the unbalance metric is lower than the threshold parameter, and the modulation control is configured to select the CPWM modulation for the commutation when the unbalance metric is higher than the threshold parameter.

In an embodiment, the unbalance metrics further include a measured or estimated output current of the ARCP inverter or a sum of the measured or estimated output current and a boosting current reference.

In an embodiment, the unbalance metrics include a neutral point unbalance voltage ripple derived from dc-link rail voltages of the ARCP inverter measured over a predetermined measurement interval.

In an embodiment, the modulation control is configured to start the ARCP inverter with the CPWM modulation from a zero or low fundamental output frequency of the ARCP inverter.

In an embodiment, the modulation control is configured to apply different unbalance metrics for selecting between the CPWM modulation and the DPWM modulation depending on whether the ARCP inverter is operating with the CPWM modulation or whether the ARCP inverter is operating with the DPWM modulation.

In an embodiment, the modulation controller is configured to apply unbalance metrics based on a fundamental output frequency and/or a carrier frequency to decide whether the CPWM modulation is maintained or the DPWM modulation is selected, when the ARCP inverter is operating with the CPWM modulation, and the modulation controller is configured to apply unbalance metrics based on estimated or measured currents to decide whether the DPWM modulation is maintained or the CPWM modulation is selected, when the ARCP inverter is operating with the DPWM modulation.

In an embodiment, when the ARCP inverter is operating with the CPWM modulation, the modulation control is configured to monitor the unbalance metrics including a fundamental output frequency $f_o$ of the ARCP inverter, a ratio of a carrier frequency $f_c$ of the ARCP inverter to a fundamental output frequency $f_o$ of the ARCP inverter, and/or a measured or estimated output current of the ARCP inverter or a sum of the measured or estimated output current and a boosting current reference, and to select the DPWM modulation, if the neutral point voltage unbalance resulting from the DPWM modulation is estimated to be sufficiently low for a successful commutation, and maintain the CPWM modulation otherwise, and when ARCP inverter is operating with the DPWM modulation, the modulation control is configured to monitor a neutral point unbalance voltage ripple derived from dc-link rail voltages of the ARCP measured over a predetermined measurement interval, and to maintain the selection of the DPWM modulation, if the neutral point unbalance voltage ripple is lower than a threshold, and to select the CPWM modulation otherwise.

In an embodiment, the modulator is configured to use space vector modulation (SVM).In an embodiment, the modulator is configured to use carrier-based modulation.

Another aspect of the invention is an auxiliary resonant commutated pole (ARCP) inverter device, comprising:

the control apparatus according to the first aspect,
a dc-link having a first DC rail and a second DC rail,
a series connection of at least two dc-link capacitances between the two rails of the dc-link, which series connection through a midpoint, called a neutral point (NP) of the dc-link, is divided into two equal parts,
one or more inverter phases, each of said inverter phases including:

a series connection of at least two main switching devices between a first DC voltage rail and a second DC voltage rail to alternatively connect the first and second dc-link rails to a phase output by the PWM modulation from the control apparatus,
one or more resonant capacitors connected in such manner that at least one terminal of the capacitor(s) is connected to one of the dc-link rails (DC+, NP, DC-) and the other terminal(s) are essentially connected to the phase output,
a series connection of at least two dc-link capacitances between the two rails of the dc-link, which series connection through a midpoint, called a neutral point (NP) of the dc-link, is divided into two equal parts,
a series connection of a resonant inductance and at least one bi-directional auxiliary switch between said phase output and said neutral point.

BRIEF DESCRIPTION OF THE DRAWINGS

In the following the invention will be described in greater detail by means of exemplary embodiments with reference to the accompanying drawings, in which

Figure 1A illustrates an exemplary ARCP inverter which the modulation control according to embodiments of the invention can be applied to;
Figure 1B illustrates an exemplary implementation of an auxiliary switch;
Figures 2A, 2B, 2C, 2D, 2E and 2F illustrate exemplary waveforms for currents $I_{d2}$, $I_{s2}$, $I_a$, voltage $U_{c2}$, and currents $I_{d1}$ and $I_{s1}$, respectively, during a mode A commutation:

Figure 3A is a schematic block diagram of an exemplary embodiment of an ARCP switching controller;
Figure 3B is a schematic block diagram of an exemplary embodiment of a carrier-based PWM modulator;
Figure 4A illustrates an exemplary space vector representation for a conventional SVPWM;
Figure 4B illustrates an exemplary switching sequence for a conventional SVPWM;
Figure 4C illustrates an exemplary switching sequency for a discontinuous SVPWM;
Figure 5A illustrates a pure sinusoidal reference signal waveform;
Figure 5B illustrates a space vector modulation (SVM) reference signal waveform;
Figure 5C illustrates a DPWM reference signal waveform;
Figure 5D illustrates generation of a DPWM reference signal waveform;
Figure 6A shows an example of a three-phase sinusoidal continuous PWM reference and a triangle carrier signal;
Figure 6B illustrates a resulting PWM signal for phase B;
Figure 7A shows an example of a three-phase 60-degree DPWM reference and a triangle carrier signal;
Figure 7B illustrates a resulting PWM signal for phase B;
Figure 8 illustrates a modulation control 70 according to an exemplary embodiment;
Figure 9A illustrates a simulation example of the creation of NP voltage unbalance $\Delta U_{NP}$ in DPWM;
Figure 9B illustrates the overall result of the frequency-based control action;
Figure 10 is a flow diagram illustrating an exemplary operation of the modulation control 70 implementing a frequency-based selection of the modulation technique;
Figure 11 is a flow diagram illustrating an exemplary operation of the modulation control 70 implementing a selection of the modulation technique based on the ratio $f_c/f_o$;
Figure 12 is a flow diagram illustrating an exemplary operation of the modulation control 70 implementing a selection of the modulation technique based on the $\Delta U_{NP}$ ripple; and
Figure 13 is a flow diagram illustrating a further operation of the modulation control 70.

DETAILED DESCRIPTION OF EXEMPLARY EMBODIMENTS

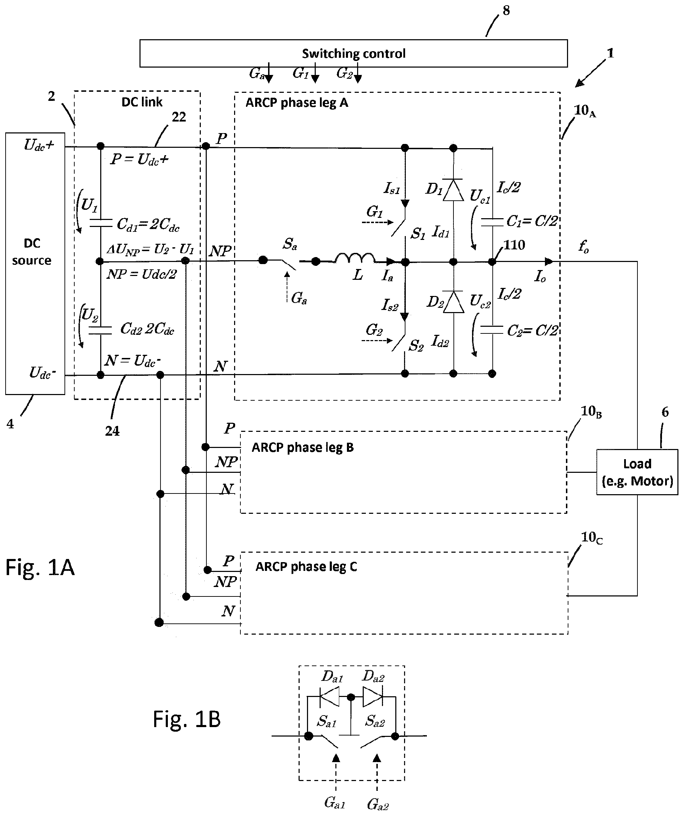

It shall be appreciated that the modulation control according to embodiments of the invention is universally applicable to any type of ARCP inverters and their derivates and modifications regardless the specific design, configuration, and operation variations of an inverter from a basic ARCP inverter. The schematic of an exemplary ARCP inverter 1 is illustrated in Figure 1 and described herein in order to alleviate comprehending operation and configuration of embodiments of the invention in relation to an exemplary basic ARCP. It is not intended to limit embodiments of the invention to the described and illustrated exemplary ARCP.

The exemplary ARCP inverter 1 includes a DC-link 2 comprising a first dc-link rail 22, and a second dc-link rail 24, a first dc-link capacitor $C_{d1}$ coupled with the first dc-link rail 22 and a dc-link midpoint, called a neutral point NP, and a second dc-link capacitor $C_{d2}$ coupled with the second dc-link rail 24 and the neutral point NP. During operation, the first dc-link rail 22 is at a first voltage, so called positive (P) dc-link potential, and the second dc-link rail 24 is at a second voltage lower than the first DC voltage, so called negative (N) dc-link potential, and the dc-link midpoint NP is at a midpoint voltage, so called neutral point voltage $U_{NP}$. The capacitances of the dc-link capacitors $C_{d1}$ and $C_{d2}$ are substantially equal, for example $C_{d1} = C_{d2} = 2C_{dc}$, so that the voltages $U_1$ and $U_2$ provided across the dc-link capacitors $C_{d1}$ and $C_{d2}$ series-connected between the dc-link rails 22 and 24 are substantially equal, i.e. a half of a dc-link voltage $U_{dc} = U_1+U_2$ between the dc-link rails 22 and 24. Thus, also the neutral point voltage or potential $U_{NP}$ essentially corresponds to half of the voltage $U_{dc}$, in other words $U_{NP} = U_{dc}/2$.

The dc power input to the inverter 10 may be obtained from any kind of a dc power source 4, such as an existing power supply network through a rectifier, or from a battery, fuel cell, photovoltaic array, etc. It shall be appreciated that dc-link 2 may be provided in a number of forms and may have a number of voltages and other attributes. Certain embodiments comprise low voltage (LV) applications where voltage difference between positive and negative dc-link rails may be between 50 to 10 VDC. In other embodiments, higher voltage levels in the range of several kV are contemplated. Further embodiments contemplate a variety of other voltage magnitudes and differences. It shall also be appreciated that the voltage difference between positive and negative dc-link rails is flexible, depending on how the dc-link 2 is fed. For example, some embodiments may use a front-end isolation transformer and rectifier connected to the dc-link with the positive and negative rails floating and the differential voltage typically in the range of 50V-1500V, but in principle in other voltages outside this range as well. In other embodiments, the positive rail, mid-point, or negative rail may be grounded to earth. Preferably, the positive and negative rails are balanced. For example, if the dc-link neutral point NP is at 0 VDC, dc-link rail 22 would be at a positive voltage (e.g., in the range of +25 VDC to +500 VDC, the range of in the range of +150 VDC to +400 VDC or other positive voltage ranges) and dc-link rail 24 would be at a negative voltage corresponding to the positive voltage (e.g., in the range of -25 VDC to -500 VDC, the range of in the range of -150 VDC to -400 VDC or other negative voltage ranges corresponding to the other positive voltage ranges). It shall be appreciated that the foregoing examples are but a few of many voltage magnitudes and polarities that may be present in or associated with the operation of dc-link 2. It shall be additionally appreciated that the voltage magnitudes of the foregoing examples may be subject to fluctuation, margins of error, tolerance, and other variations and may not be rigidly fixed to the precise example magnitudes stated. It shall be further appreciated the term bus may be utilized in place of the term link such that, for example, references to a dc-link are understood to encompass a dc-bus and vice versa.

The exemplary ARCP inverter 1 illustrated in Figure 1 is a three-phase half-bridge ARCP inverter including a power section 10A, 10B, and 10C for each phase or phase leg A, B, and C, respectively. Operation and configuration of the inverter is illustrated and described in more detail primarily with respect to one phase or phase leg A herein, but the other phases or phase legs B and C of the inverter can have identical operation and configuration. The power sections 10A, 10B, and 10C of phase legs A, B, and C may be connected to the positive dc-link rail 22, the neutral point NP, and the negative dc-link rail 24 of the common dc-link 2, and there by to the negative (N), the neutral point (NP) and the positive (P) dc-link potentials, as illustrated in Fig.1. The output node of each power section 10A, 10B, and 10C can be connected to an ac load 6, such as an ac motor (e.g., induction motor) or ac grid or any applicable electric load. It should be appreciated that although a three-phase ARCP inverter is illustrated as an example herein, an ARCP inverter may be implemented as a single-phase inverter, or generally include any number of inverter phases or phase legs. Moreover, although a half-bridge ARCP inverter is illustrated as an example herein, the ARCP inverter may have other configurations, particularly a full-bridge configuration.

The exemplary half-bridge power section 10A illustrated in Fig. 1A includes a pair of main or power switching devices $S_1$ and $S_2$ coupled in parallel to the dc power source 4 by way of the dc-link 2. The first main switching device $S_1$ may have a first terminal electrically coupled to the positive dc-link rail 22 and a second terminal electrically coupled to an output node 110. The second main switching device $S_2$ having a first terminal coupled to output node 110 and a second terminal coupled to the negative dc-link rail 24. Across the first main switching device $S_1$ between the positive dc-link rail 22 and the output node 110 is connected a first antiparallel diode $D_1$, and across the second main switching device $S_2$ between the output node 110 and the negative dc-link rail 24 is connected a second antiparallel diode $D_2$. Further, in embodiments, a first resonant capacitor $C_1$ may be operationally connected (i.e., directly or via additional components, such as an active or passive damping circuit series connected with the resonant capacitor) in parallel with the first main switching device $S_1$, and a second resonant capacitor $C_2$ may be operationally connected in parallel with the second main switching device $S_2$. More generally, there may be one or more resonant capacitors connected in such manner that at least one terminal of the capacitor(s) is connected to one of the dc-link rails (DC+, NP, DC-) and the other terminal(s) is(are) operationally connected to the phase output node 110. The first main switching device $S_1$ is operable to turn on and turn off, and thereby to respectively connect and disconnect the dc-link rail 22 and the output node 110, in response to control signals $G_1$ received from a control and driver circuitry, such as an ARCP switching controller 8 illustrated in Fig. 1A. The second main switching device $S_2$ is operable to turn on and turn off, and thereby to respectively connect and disconnect the dc-link rail 24 and the output node 110, in response to control signals $G_2$ received from the control and driver circuitry, such as the ARCP switching controller 8. In embodiments, the switching device $S_1$ and $S_2$ may an insulated-gate bipolar transistor (IGBT), or another type of semiconductor switching device, such as an integrated gate-commutated thyristor (IGCT), a metal-oxide-semiconductor field-effect transistor (MOSFET), or a silicon carbide (SiC) MOSFET to name several examples.

In operation, when the first main switch $S_1$ is turned on (to a conductive or closed state), a first switch current $I_{s1}$ can flow between the dc-link rail 22 and the output node 110. Similarly, when the second main switching device S2 turned on (to a conductive or closed state), a second switch current $I_{s2}$ can flow between the output node 110 and the dc-link rail 24. On the other hand, when the first main switching device $S_1$ is turned off (to a non-conductive or open state), the first switch current $I_{s1}$ will not flow in the switch-forward direction between the dc-link rail 22 and the output node 110, although a current may flow in the switch-reverse direction through the first anti-parallel diode $D_1$ of the first main switching device $S_1$. Similarly, when the second main switching device $S_2$ is turned off (to a non-conductive or open state), the second switch current $I_{s2}$ will not flow in the switch-forward direction between the output node 110 and the dc-link rail 24, although a current may flow in the switch-reverse direction through the anti-parallel diode $D_2$ of the second switching device $S_2$. Thus, by turning on and off and closing the first main switching device $S_1$ and the second main switching device $S_2$, the output voltage at the output node 110 will be controlled or commutated to be either the voltage from the dc-link rail 22 or the dc-link rail 24. The purpose of the resonant capacitors $C_1$ and $C_2$ is to limit the voltage slew rate of the output node; this ensures that the voltages $U_{c1}$ and $U_{c2}$ across the main switching devices $S_1$ and $S_2$ do not significantly change during turn-off such that the main switching devices are turned off at zero-voltage.

Further, an auxiliary circuit comprising a resonant inductor L and a bidirectional auxiliary switch $S_a$ is connected in series between the neutral point NP and the output node 110. The auxiliary switch $S_a$ is operable to turn on and turn off, and thereby to respectively connect and disconnect the neutral point and the output node 110, in response to control signals $G_a$ received from the control and driver circuitry, such as the ARCP switching controller 8. Ideally, the auxiliary switch $S_a$ behaves like a bidirectional thyristor: it can be triggered into conduction, and it turns off if the current tries to reverse its direction. In embodiments, the bidirectional auxiliary switch Sa may be implemented with a pair of ordinary switching devices connected back-to-back, for example in a common-emitter or common-collector configuration, and provided with anti-parallel diodes. Fig. 1B illustrates an exemplary auxiliary switch Sa comprising a first auxiliary switching device $S_{a1}$ and a second auxiliary switching device $S_{a2}$ in a series connection, a first anti-parallel diode $D_{a1}$ connected across the first auxiliary switching device $S_{a1}$, and a second antiparallel diode $D_{a2}$ connected across the second auxiliary switching device Sa2. One of the two auxiliary switching devices $S_{a1}$ and $S_{a2}$ is turned on and conducting at a time, as is one of the two antiparallel diodes $D_{a2}$ and $D_{a1}$, respectively, in response to control signals $G_{a1}$ and $G_{a2}$ received from a control and driver circuitry, such as an ARCP switching controller 8 illustrated in Fig. 1A. In each case, the auxiliary current Ia will flow through one diode in series with one switch. The auxiliary switching devices in the auxiliary circuit are turned on and off at zero-current. When the first auxiliary switching device $S_{a1}$ is turned on and the second switching device $S_{a2}$ is turned off, the auxiliary current flow in one direction through $S_{a1}$ and $D_{a2}$. When the first auxiliary switching device $S_{a1}$ is turned off and the second switching device $S_{a2}$ is turned on, the auxiliary current flow in the opposite direction through $S_{a2}$ and $D_{a1}$. The auxiliary circuit is only used when the output node 110 is required to commutate from one voltage rail to the other. The auxiliary circuit functions by creating a pulse of current that, in combination with the resonant capacitors, is used to slew the output voltage on the output node 110.

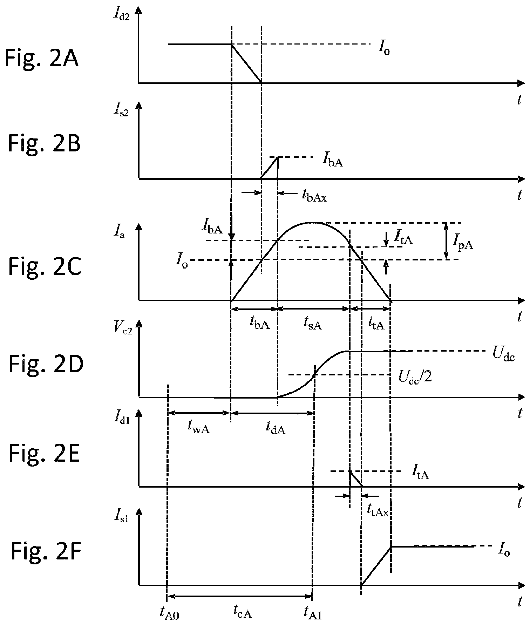

The basic operation principle and commutation modes of an ARCP inverter is described, for example, an article "The auxiliary resonant commutated pole converter", IEEE-IAS Conference Proceedings 1990, pp. 1228-35, and in US5047913 by R. W. De Doncker et al. The commutation in an ARCP inverter is different from the hard-switched commutation. In the ARCP, the commutation of the output voltage is always initiated by turning one of the main switches off. This is the case even if the output current $I_o$ was initially on a diode, for example on diode $D_2$ in Fig.1A. In the following, the commutation is summarized for a single phase, e.g., the ARCP phase leg A. As used herein, the mode of commutating the output current $I_o$ from a diode to a switch in ARCP is called mode A and the mode of commutating the output current $I_o$ from a switch to a diode is called mode B, when the auxiliary circuit is involved in commutation and a boost current is provided. The mode of commutating high output current $I_o$ from a switch to diode, when the output current $I_o$ itself is sufficient to drive the output voltage from one dc-link rail to another and the auxiliary circuit is not involved, is called mode 0 herein. As an example, referring to Figs. 2A-2F, the mode A commutation of the

positive output current $I_o$ ($I_o > 0$) from the diode $D_2$ to the main switch $S_1$ and the output voltage from N to P:

- Starting with the main switch $S_2$ and the diode $D_2$ conducting (turned on), the diode $D_2$ supplying the output current $I_o$ (Fig. 2A) and switches $S_1$, $S_{a1}$ and $S_{a2}$ not conducting (turned off); during the commutation $S_2$ turns off and $S_1$ turns on.
- The command for commutation arrives at time instant $t_{Ao}$. The auxiliary switch $S_a$ is turned on (at zero current) after a time interval $t_{wA}$, which marks the start of the boosting interval $t_{bA}$. The neutral point voltage $U_{NP}$ is applied across the resonant inductor L, which causes the auxiliary current $I_a$ through the resonant inductor L to ramp up linearly (Fig. 2C), and the current in diode $D_2$ decreases accordingly as $I_{d2}$ = $I_o$ $I_a$ (Fig. 2A). In order to turn the diode $D_2$ off, the inductor current $I_a$ must increase to the level of the output current $I_o$ and even beyond (boosting current $I_{bA}$) so that finally $I_a = I_o + I_{bA}$. The boosting portion $I_{bA}$ of the total inductor current $I_a$ is diverted to the switch $S_2$ parallel to the diode $D_2$ (Fig. 2B) while the load takes its own, i.e., the output current $I_o$.
- The switch $S_2$ is turned off after a time interval $t_{bAx}$ (Fig. 2B), which marks the end of the boosting interval $_{tbA}$, and the commutation swing of the output voltage $U_{c2}$ from zero to full $U_{dc}$ starts (Fig. 2D). The boosting current $I_{bA}$ must be large enough to force the output potential swing from N to P, charging capacitor $C_2$ and discharging capacitor $C_1$. If there is a slight unbalance of the dc link voltage halves so that $U_2 < U_1$, more boosting current is needed, and if $U_2 > U_1$, less boosting current suffices.
- The interval for the swing of $U_{C2}$ from zero to $U_{dc}$ has duration $t_{sA}$. When $U_{c2}$ reaches $U_{dc}$ and $U_{c1}$ reaches zero after a time interval $t_{sA}$ (Fig. 2D), the portion of the auxiliary current Ia exceeding the output current I turns the diode $D_1$ on and is called $I_{tA}$ (Figs. 2C and 2E). The switch $S_1$ may be turned on as soon as $U_{c2}$ has reached $U_{dc}$. preferably right after (a time window $t_{tAx}$) $D_1$ starts conducting (Fig. 2F). The boosting time $t_{bA}$ may preferably be set to a value that minimizes the current $I_{tA}$ close to zero. This way the losses and the reverse recovery current of $D_1$ will be minimized, as well as the duration of the commutation. This strategy narrows the time window $t_{tAx}$. Thus, the precise timing of $S_1$ turn-on is critical.
- Because the diode $D_1$ and the switch $S_1$ clamp the output voltage to the positive dc potential P, the inductor current $I_a$ decays linearly to zero during a time interval is $t_{tA}$ (Fig. 2C).
- The current $I_{d1}$ decays first from $I_{tA}$ to zero in time $t_{tAx}$, whereafter the switch current $I_{s1}$ increases linearly from zero to the load current level $I_o$ (Fig. 2F) while $I_a$ continues to decrease from $I_o$ towards zero (Fig. 2C), after which the auxiliary switch Sa is turned off and the commutation sequence is finished.

- The total duration of the commutation from the turn-on of the auxiliary switch $S_a$ to completion in mode A is $t_A = t_{bA} + t_{sA} + t_{tA}$. There is current in the auxiliary branch during this time interval.

The mode B of the commutation from switch $S_1$ to diode $D_2$, when the output current $I_o$ is positive ($I_o > 0$), is carried out similarly but in opposite order, i.e. turning on the auxiliary switch $S_a$ and linearly building up the auxiliary current Ia and a boosting current $I_{bB}$ (in negative direction through the inductor L to the neutral point NP , positive direction in $S_1$) for a boosting time $t_{bB}$, turning off the switch $S_1$, charging $C_1$ and discharging $C_2$, and turning on $D_2$ and $S_2$ to cause the output potential swing from P to N.

The descriptions above for modes A and B assumed a positive direction of $I_o$). The operation for a negative $I_o$ ($I_o < 0$) is identical, just the roles of $S_1$ and $S_2$, $D_1$ and $D_2$, and $U_1$ and $U_2$ are swapped from mode A to mode B, and vice versa.

The ARCP switching controller 8 illustrated in Fig. 1A refers generally to any control functions, logic, hardware, firmware, software, etc. required to control main and auxiliary switching devices in the ARCP phase leg(s) based on a PWM signal or PWM signals. Given a PWM signal, a standard hard-switching inverter does not need too much additional logic to form a complete inverter drive system. At a minimum, the direct PWM signal is sent to one switch while the complement of the PWM input signal is sent to the other switch in that phase. The ARCP on the other hand, requires more than the PWM modulation and control: it requires an additional more complex control, particularly due to the auxiliary circuit and the auxiliary switch(es).

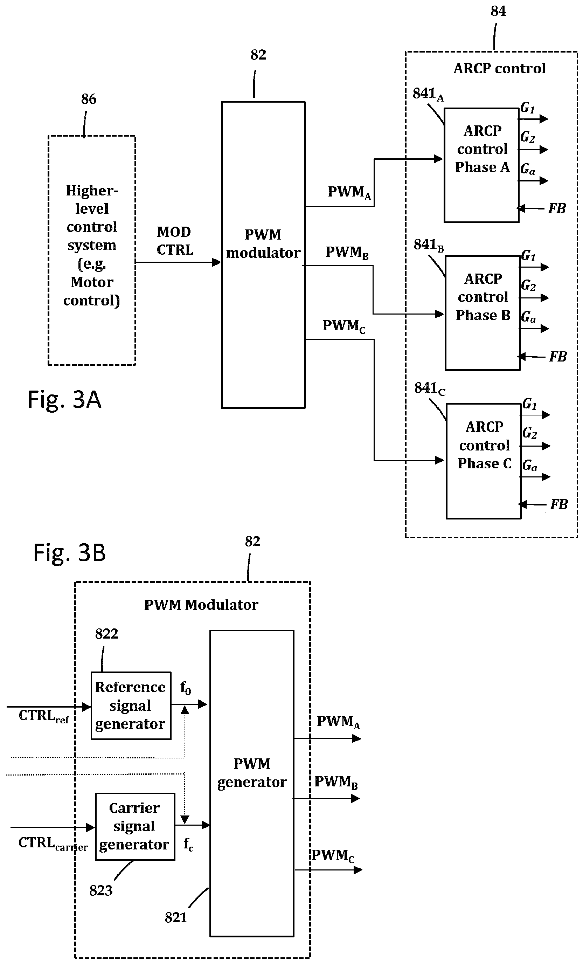

Fig. 3A is a schematic block diagram of an exemplary embodiment of an ARCP switching controller 8 having a PWM modulator 82 and ARCP control functions 84 separated. In the illustrated example, the ARCP control 84 may include a dedicated ARCP control module 841A, 841B, and 841C adapted to provide control signals, such as $G_1$, G2, and Ga (or $G_{a1}$ and $G_{a2}$) to each ARCP phase leg A, B and C, respectively, based on a respective PWM signal PWMA, PWMB and PWMC received from the PWM modulator 82. The ARCP control 84, or the respective ARCP control module 841A, 841B, and 841C, may have to provide for instance the following functions for each phase leg A, B and C: Activation of the correct auxiliary switch before commutating the main switches, controlling the boost time of the inverter, ensuring that the main switches are switched at zero-voltage, ensuring that the auxiliary switches are switched at zero-current, initially starting the switching sequence upon power up, etc. Depending on a selected ARCP control strategy, various sensing feedbacks FD may be required to implement the control algorithms, such as feedback from main switch zero-voltage sensors, auxiliary switch zero-current sensors, an auxiliary current sensor, an output (load) current sensor, a dc-link voltage sensor, a dc-link capacitor sensor(s), a neutral point voltage sensor, etc.

It should be appreciated that the invention is not restricted to any specific PWM modulation method. The exemplary PWM modulator 82 illustrated in Fig. 3A may apply any suitable PWM modulation method providing the PWM signals PWMA, PWMB and PWMC to the ARCP control 84. There are various PWM methods which can be implemented via scalar or vector method. Sinusoidal PWM (SPWM) and space vector PWM (SVPWM) are the most commonly used modulation techniques due to their advantages such as implementation simplicity for the former and improved performance for the latter. In a carrier-based scalar approach, a modulation wave is compared with a triangular carrier wave and the intersections define the switching instants. In the space vector approach, the time lengths of the inverter states are pre-calculated for each carrier cycle by employing space vector theory and the PWM pulses are directly programmed. The PWM modulator 82 may be controlled by one or more modulation control inputs or modulation commands, represented commonly with MOD CTRL in Fig, 3A, that may be received from a higher-level control 86. In embodiments, the higher-level control 86 is an electric motor control. In embodiments, the higher-level control may use a scalar control method, a field oriented control (FOC) method, or a direct torque control (DTC) method. In embodiments, the modulation control inputs or modulation commands from the higher-level control may include a reference for the output voltage frequency, and optionally a setting or reference for the carrier frequency to the modulator.

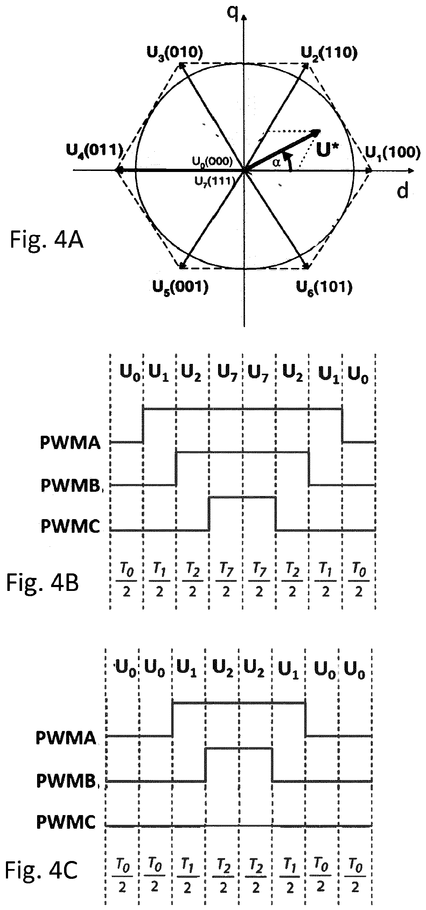

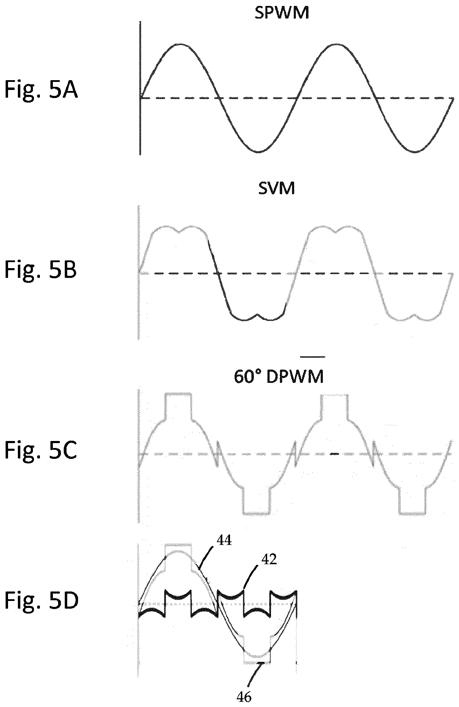

In embodiments, the PWM modulator 82 may apply vector modulation, such as the space vector modulation (SVM) or the space vector PWM (SVPWM) for providing the PWM signals PWMA, PWMB and PWMC to the ARCP control 84. The modulator may have a voltage reference (e.g., from the higher-level control) in vector format, i.e., defining amplitude and angle. The SVM method treats the sinusoidal voltage as a constant amplitude vector rotating at constant frequency. The magnitude of the vector is related to the desired magnitude of the output voltage and the time this vector takes to complete one 360° revolution is the same as the fundamental time period of the output voltage. Using a digital vector calculation, the voltage reference is converted to correct PWM pulse pattern during certain time period. As the voltage reference changes, the resulting PWM pulse pattern changes as well. A three-phase, two-level inverter provides eight possible switching states, made up of six active and two zero switching states. The SVPWM technique approximates the reference voltage U* by a combination of eight voltage vectors (Uo to $U_7$) which corresponds to the eight switching patterns, as illustrated by an exemplary space vector representation in Fig. 4A for a conventional SVPWM. The zero vectors $U_0$ are at the origin and no voltage is supplied to a load. The reference vector U* is sampled at regular interval T. The active vectors $U_1$ -$U_6$ divide the plane for six sectors (60 degrees), where the reference vector U* is synthesized by switching between on two adjacent non-zero (active) vectors and timing of the ON times of the vectors, and two zero vectors are added to fill the remaining time in the switching sequence having the period T. In the example shown in Fig. 4A, the reference vector U* which the inverter has to synthesize using the active vector available is located between $U_1$ and $U_2$ in sector 1. It is now possible to quickly alternate between these two basic vectors $U_1$ and $U_2$ to emulate the voltage vector U* at angle $\alpha$. The ON times (durations) of the vectors $U_1$, $U_2$, $U_0$ and $U_7$ are $T_1$, $T_2$, $T_0$ and $T_7$. Fig. 4B illustrates an example of a switching times assignment or a switching sequence (PWM signals PWMA, PWMB and PWMC) for upper main switching devices S1 of phase legs A, B and C in Fig. 1. Similar synthetization or calculation can be done for a reference vector U* of each sample period T. Fig. 5B illustrates an example of a space vector modulation signal waveform for a conventional SVPWM. Regardless of the pulse length determination method or the type of pulse sequence, the switching events are usually operationally synchronized to some periodic clock signal, which acts like the carrier wave. Thus the carrier frequency is equally applicable to describe the event timings in case of SVM, SVPWM, DPWM, etc.

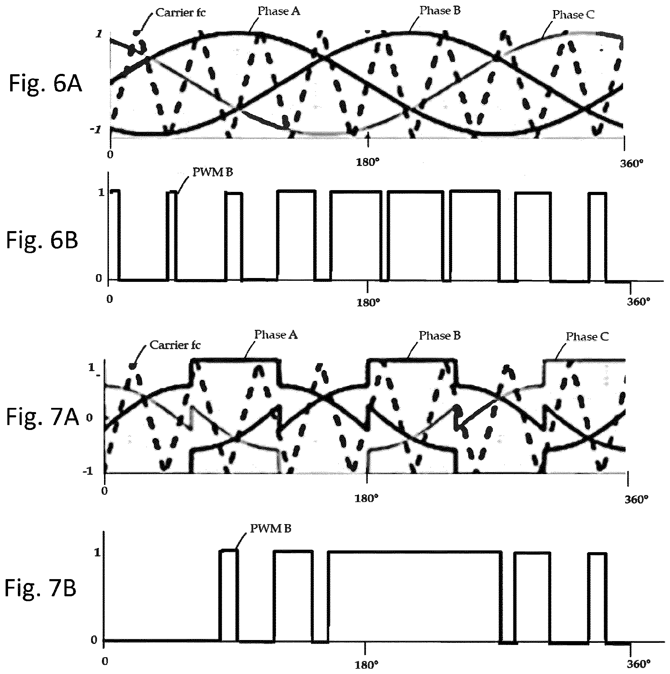

In Fig. 3B, a schematic block diagram of an exemplary embodiment of a modulator 82 applying a carrier-based PWM technique. The PWM output signal is generated by comparing a reference voltage waveform (a modulating signal) of frequency $f_o$ with a carrier wave of frequency $f_c$. The frequency of the reference wave signal $f_o$ determines the output frequency of the inverter and its amplitude controls a desired ac output voltage $v_o$ of the inverter. The frequency $f_o$ is also called a fundamental frequency of the inverter output. The carrier frequency $f_c$ also determines the switching instants of the inverter. The carrier wave is typically a triangle wave or a sawtooth wave. In an embodiment, the reference wave $f_o$ may be generated locally in the modulator 82, e.g., by a reference signal generator 822, possibly based on a reference signal control $CTRL_{ref}$ from a higher-level control 86. In another embodiment, the reference wave $f_o$ may be applied from the higher-level control 86, as illustrated by a dotted line in Fig. 3B. Similarly, in an embodiment, the carrier wave $f_c$ may be generated locally in the modulator 82, e.g., by a carrier signal generator 824, possibly based on a reference signal control $CTRL_{carrier}$ from the higher-level control 86. In another embodiment, the carrier wave fc may be applied from the higher-level control 86, as illustrated by a dotted line in Fig. 3B. In embodiments, when using a carrier-based sinusoidal PWM, to output a sinusoidal output voltage at the fundamental frequency $f_o$ from the inverter, a substantially sinusoidal reference wave $f_o$ is inputted to the PWM generator 821. Fig. 5A illustrates a pure sinusoidal reference signal waveform. Fig. 6A shows an example of a three-phase sinusoidal continuous PWM reference $f_o$ and a triangle carrier signal

$f_c$. Each phase A, B and C of the reference wave is compared with to the triangle wave fc to determine the pulse width modulation of the respective phase. When the reference wave of a phase is greater than the triangle wave, the PWM output signal of respective phase is high. When the reference wave of the phase is less than the triangle wave, the PWM output signal of the respective phase is low. The resulting PWM signal for phase B is illustrated in Fig. 6B. The switching occurs each carrier signal cycle during the reference signal cycle (360 degrees).

In embodiments, the reference wave may also be slightly modified from sinusoidal, for example by adding a zero-sequence component to the original sinusoidal reference.

In ARCP PWM inverters, a so-called continuous PWM (CPWM) method is used, wherein waveforms which are generated with the intention that switching occurs each carrier signal cycle during each (e.g., sinusoidal) reference signal cycle (period). In other words, pulse width modulation is intended to be continuous throughout the reference signal cycle, hence the term "continuous" PWM. In hard-switching PWM inverters, a discontinuous pulse width modulation (DPWM) technique is a further method of reducing switching losses in the inverter by decreasing the number of switching operations in comparison to the CPWM. To this end, the PWM modulation is discontinued (hence the term "discontinuous" PWM), i.e., switching does not occur, during a predetermined portion or range of each reference signal cycle, by clamping the PWM modulating signal to maximum or minimum value so that the switching device is maintained in ON or OFF state during this range. Most often the PWM is discontinued in a 60-degree range, i.e., the the switches of the inverter do not switch during a one-third range (120 degrees) of the reference signal cycle. Fig. 5C illustrates a DPWM signal waveform clamped to the positive or negative dc-link rail two times for 60 degrees during each signal wave cycle. As a result, the number of switching operations and thereby the switching losses in each reference signal cycle can be decreased by approximately one third.

In embodiments, when using vector modulation, such as the space vector modulation (SVM) or the space vector PWM (SVPWM), the DPWM modulation can be embodied by placing or distributing zero vectors in an appropriate manner in a switching sequency to obtain the desired discontinuous pulse pattern. Let us assume that DPMW modulation shall be employed when the inverter has to synthesize the reference vector U* of Fig. 4A using the active vector available is located between $U_1$ and $U_2$ in sector 1. Figure 4C illustrates an exemplary switching times assignment or switching sequency (PWM signals PWMA, PWMB and PWMC) for upper main switching devices S1 of phase legs A, B and C in Fig. 1 with a discontinuous SVPWM (DPWM). When comparing with the example of a switching times assignment or a switching sequence for a conventional SVPWM (CPWM) shown in Fig. 4B, it can be seen that the switching device S1 of the phase leg C is now turned off (discontinued) for the entire 60 degrees section 1. This achieved by replacing the two zero vectors $U_7$ (1111) placed in the middle of the sequence with two zero vectors $U_0$ (0000) placed in the beginning and end of the sequence.

In embodiments, when using a carrier-based modulation, the DPWM modulation may be implemented by inputting to a PWM generator, such as the PWM generator 821 in Fig. 3B, a specific DPWM reference wave $f_o$. In embodiments, a DPWM reference wave 46 can be generated by adding the zero-sequence component 42 to the original (sinusoidal) reference wave 44, for example as illustrated in Fig. 5D.

Fig. 7A shows an example of a three-phase 60-degree DPWM reference $f_o$ and a triangle carrier signal $f_c$. Again, each phase A, B and C of the DPWM reference wave is compared with to the triangle wave fc to determine the pulse width modulation of the respective phase. The resulting PWM signal for phase B is illustrated in Fig. 7B. As the reference wave of phase B is clamped to a negative peak amplitude during 0-60 degrees and clamped positive peak amplitude during 180-240 degrees in the reference signal cycle, the resulting PWM output is respectively clamped to be low for 0-60 degrees region and clamped to be high for the 180-240 degrees region. Thereby the switching is discontinued and does not occur at carrier signal cycles during these clamped regions of the reference signal cycle.

Referring again to Fig. 1A, the auxiliary currents $I_a$ have an effect on the balance of the *NP* potential, or more strictly, to the balance of the voltages $U_1$ and $U_2$. The balance can be quantified by the difference $\Delta U_{NP} = U_2 - U_1$, where a perfect balance would mean $\Delta U_{NP} = 0$. The "normal" ripple current in the dc link 2 has no effect on $\Delta U_{NP}$ because $C_{d1}$ and $C_{d2}$ are charged and discharged by the same current. On the contrary, the current $I_a$ to *NP* from the auxiliary circuit is split into two halves, one charging $C_{d1}$ and the other discharging $C_{d2}$ (or vice versa). In this respect, the *NP* balancing problem is a well-known challenge in all topologies exploiting the *NP* potential.

A significant NP voltage unbalance $\Delta U_{NP}$ will fail ARCP commutations. For example, in mode A the switch $S_2$ is turned off after a time interval $t_{bA}$, which marks the end of the boosting interval. The ARCP control computes the required boosting times as per $t_{bA} = (I_o + I_{bA})L/(U_{dc}/2)$ and the commutation swing of the output voltage $U_{c2}$ from zero to full $U_{dc}$ starts. The boosting current reference $I_{bA}$ must be large enough to force the output potential swing from N to P, charging capacitor $C_2$ and discharging capacitor $C_1$.

If there is an unbalance of the dc link voltage halves so that $U_2 < U_1$, more boosting current is needed, and if $U_2 > U_1$, less boosting current suffices. In order to have a successful swing of $U_{c2}$ from zero all the way to $U_{dc}$ in a case where $U_2 < U_1$, there must be a boosting current of at least

$$I_{bA,min} = \sqrt{(C/L)(1 - 2U_2/U_{dc})}U_{dc}$$

and the equivalent minimum required boosting time $t_{bA}$ in mode A as a function of the output current $I_o$ and the actual values $U_2$ and $U_{dc}$ would be

$$t_{bA,min} = \frac{LI_o}{U_2} + \sqrt{LC}\sqrt{\left(\frac{U_{dc}}{U_2}\right)^2 - 2\frac{U_{dc}}{U_2}}$$

In the presence a of significant NP voltage unbalance $\mathit{\Delta U_{NP}}$ the boosting time calculated by the ARCP control will be less than $t_{bA,min}$ and the commutation will certainly fail because $U_{c2}$ will not be able to reach $U_{dc}$, but instead the current of the resonant capacitor $C_2$ current will reverse prematurely and $U_{c2}$ will swing back towards zero. It is therefore important to avoid a significant NP voltage unbalance $\Delta U_{NP}$ by some means. The unavoidable resistance R and semiconductor voltage drops $U_0$ in the current path will also necessitate some extra margin in the boosting current.

As each commutation in each phase either sink or source a current to the neutral point *NP* via the auxiliary current $I_a$, care must be taken that the accumulated charge does not drive the voltage balance $\Delta U_{NP}$ too far from the ideal. In a continuous PWM modulation (CPWM), the basic operation of the ARCP contributes a minute net charge $\Delta Q$ to the *NP* from each phase and in each carrier cycle of the modulation.

The charge contribution from each phase is composed of two parts, one resulting from the swing of the output voltage from one dc link potential (N or *P*) to the opposite potential, and the other one from the swing back. These two parts of charge are of opposite sign (mode A and mode B), thus partly canceling each other's effect on the balance $\Delta U_{NP}$.

Further, in a three-phase inverter, the total charge contribution is the sum of the contributions from each phase, which largely cancel each other out in the continuous PWM modulation where every phase has a two-way swing from N to P and back during a carrier cycle, and the sum of the output phase currents is zero. During normal operation there tends to be a ripple at a frequency of 3 times the fundamental output frequency $f_o$ in $\Delta U_{NP}$ even if the dc voltage $U_{dc}$ was constant, i.e., $U_1 + U_2 = U_{dc}$.

In the DPWM modulation, each carrier cycle does not include up-and-down commutations in each phase. As discussed above, the DPWM has a characteristic that each phase has commutation free "rest" intervals (the clamped 60-degree regions) twice per the reference wave cycle. Ideally, this leads to one of the phases being at rest at any instant of time so that only two phases are modulating and contributing to the net charge transfer to *NP*. This feature makes the ripple $\Delta U_{NP}$ larger. Prior art ARCP inverters employ exclusively CPWM which results in higher switching losses compared to using DPWM as well for favorable modulation indices. This choice may have been due to the significant NP voltage unbalance $\Delta U_{NP}$ occurring with DPWM and the related challenges for robustly controlling ARCP commutations.

An aspect of the invention is to provide means for robust operation of an ARCP in the presence of NP voltage unbalance due to DPWM.

According to an aspect of the invention, a modulation control is configured to dynamically select either the CPWM modulation or the DPWM modulation to carry out a commutation of an ARCP inverter in a such a way that switching losses of the ARCP inverter are reduced while a failure of the commutation of the ARCP inverter due to a neutral point voltage unbalance $\Delta U_{NP}$ of the ARCP inverter is avoided.

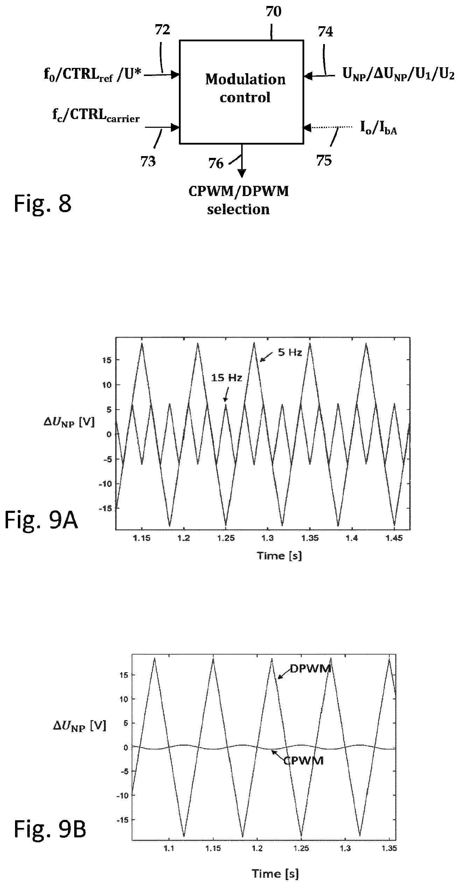

A modulation control 70 according to an exemplary embodiment of the invention is illustrated in Fig. 8. The modulation control 70 is configured to monitor the operation of the ARCP inverter and to determine whether the DPWM modulation can be selected to reduce switching losses of the ARCP inverter or whether the CPWM modulation must be selected to avoid a failure of the commutation of the ARCP inverter, and configured to issue a command 76 to select either CPWM or DPWM modulation accordingly.

In embodiments, the modulation control 70 is configured to issue a command 76 to select the DPWM modulation, if the neutral point voltage unbalance $\Delta U_{NP}$ resulting from the DPWM modulation is determined to not cause a failure of the commutation of the ARCP inverter, and the modulation control is configured to issue a command 76 to select the CPWM modulation for the commutation, if the neutral point voltage unbalance $\Delta U_{NP}$ resulting from the DPWM modulation is determined to cause a failure of the commutation of the ARCP inverter.

In embodiments, the modulation control 70 is configured to issue a command 76 to select the DPWM modulation, if the neutral point voltage unbalance $\Delta U_{NP}$ resulting from the DPWM modulation is determined to be sufficiently low for a successful commutation, and the modulation control 70 is configured to issue a command 76 to select the CPWM modulation for the commutation, if the neutral point voltage unbalance $\Delta U_{NP}$ resulting from the DPWM modulation is determined to be excessively high for a successful commutation.

In embodiments, the modulation control 70 is configured to monitor one or more unbalance metrics 72, 73, 74 and/or 75 directly or inversely proportional to a neutral point voltage unbalance $\Delta U_{NP}$ of the ARCP inverter, preferably to a neutral point unbalance voltage ripple $\Delta U_{NP}$ of the ARCP inverter, and the modulation control 70 is configured compare the monitored unbalance metrics to issue a command 76 with one or more threshold parameters, preferably with hysteresis, and to dynamically issue a command 76 to select the CPWM modulation or the DWPM modulation based on a result of the comparison.

In embodiments, the unbalance metrics include a fundamental output frequency $f_o$ of the ARCP inverter. In the example illustrated in Fig. 8, the fundamental output frequency $f_o$ is derived from the reference wave $f_o$ or the reference signal control $CTRL_{ref}$ or the reference voltage vector U* received into the metrics input 72 of the modulation control 70, or from an estimated output frequency obtained from the higher-level control 86. The modulation control 70 is configured to dynamically issue a command 76 to select the DPWM modulation for the commutation, when the fundamental output frequency $f_o$ of the ARCP inverter is higher than the threshold parameter, and the modulation control 70 is configured to dynamically issue a command 76 to select the CPWM modulation for the commutation when the output frequency $f_o$ of the ARCP inverter is lower than the threshold parameter, wherein the threshold parameter represents an absolute frequency value or a percentage of a frequency range.

The frequency-based selection of the modulation technique is feasible because the amplitude of a neutral point voltage unbalance $\Delta U_{NP}$ of the ARCP inverter is proportional to the carrier frequency $f_c$ and roughly inversely proportional to both the output frequency $f_o$ and the total dc-link capacitance $C_{dc}$: $\Delta U_{NP} \sim f_c/(f_o C_{dc})$. It is also more than directly proportional to the output current $\hat{I}_o$ (the dependency being amplified by the boosting currents $I_b$). The worst case for $\Delta U_{NP}$ drift occurs at zero frequency $f_o = 0$ Hz, and at output phase angle $\varphi = 0$, $2\pi/3$, or $4\pi/3$. In those operating points one of the output currents of the phases A, B and C is at its peak value. Fig. 9A illustrates a simulation example of the creation of NP voltage unbalance $\Delta U_{NP}$ with the DPWM for output frequencies $f_o$ of 5 Hz, respectively 15 Hz with ARCP circuit values $C_{dc} = 12.5$ mF, L = 625 nH, C = 500 nF and $U_{dc} = 1000$ V. The carrier (switching) frequency was $f_c = 8$ kHz, the output current $I_o = 600$ A$_{rms}$ and the boost current references $I_{bA}$ and $I_{bB}$ were 250 A. It can be clearly seen that for the low output frequency of $f_o = 5$ Hz a significant ripple on the NP voltage unbalance $\Delta U_{NP}$ has developed. On the other hand, the developed $\Delta U_{NP}$ ripple for the higher output frequency of $f_o = 15$ Hz may be considered acceptable. Thus, a suitable threshold for swapping the modulation technique could be somewhere between 5 Hz and 15 Hz, for example. Fig. 9B illustrates the overall result of the frequency-based control action for an output frequency $f_o = 5$ Hz under the same conditions as in Fig. 9A. For this low output frequency, the frequency-based control method selects CPWM which results in only marginal $\Delta U_{NP}$ ripple. With only minimal margins on the boost current references $I_{bA}$ and $I_{bB}$ there will be no failure of the ARCP resonant voltage swings (commutations). If, on the other hand, DPWM is used instead, ARCP commutations are closer to fail due to the resulting unacceptable ripple on $\Delta U_{NP}$ as explained above.

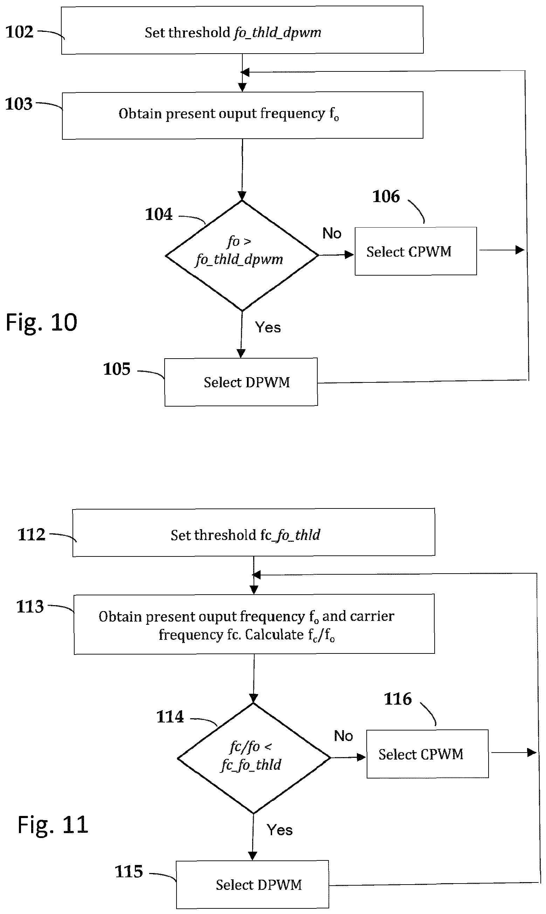

An exemplary operation of the modulation control 70 implementing a frequency-based selection of the modulation technique is now described with reference to Fig. 10. An inverter threshold parameter *fo_thld_dpwm* is set (step 102). The modulation control 70 obtains the present inverter output frequency $f_o$ (step 103) and selects either CPWM or DPWM modulation in steps 104, 105, and 106 as follows:

**if** *fo >fo_thld_dpwm* select DPWM **else** select CPWM.

Some hysteresis *fo_dpwm_hyst* is preferably added to avoid toggling between CPWM and DPWM, when the inverter output frequency $f_o$ *is* around the threshold *fo_thld_dpwm.* Referring to the simulation example illustrated in Fig. 9B, the threshold *fo_thld_dpwm* could have been set to 15 Hz, for example, and the hysteresis *fo_dpwm_hyst* to 2 Hz, for example, which would control the $\Delta U_{NP}$ ripple to about +/- 5 V or less.

In embodiments, the unbalance metrics include a ratio $f_c/f_o$, because $\Delta U_{NP} \sim f_c/(f_o C_{dc})$. An exemplary operation of the modulation control 70 implementing a selection of the modulation technique based on the ratio $f_c/f_o$ is now described with reference to Fig. 11. An inverter threshold parameter *fc_fo_thld* is set (step 112). The modulation control 70 obtains the present inverter output frequency $f_o$ and the present carrier frequency fc (step 113) and selects either CPWM or DPWM modulation in steps 114, 115, and 116 as follows:

**if** *fc/fo < fc_fo_thld* select DPWM **else** CPWM.

Referring to the simulation example illustrated in Fig. 9B, the threshold *fc_fo_thld* could have been set to 500, for example, which would control the $\Delta U_{NP}$ ripple to about +/- 5 V or less.

In embodiments, the unbalance metrics further include a measured or estimated output current $I_o$ of the ARCP inverter or a sum of the measured or estimated output current $I_o$ and a boosting current reference $I_{bA}$ for a more accurate estimate of the appropriate CPWM or DPWM operating areas of the ARCP inverter than using only $f_o$ or $f_c/f_o$. The $\Delta U_{NP}$ ripple is proportional to $(I_o + I_{bA})$ * $f_c/(f_o C_{dc})$. For example, the ratio $f_c/f_o$ may be replaced by the metrics $I_o + I_{bA}$ * $f_c/f_o$ for obtaining a more accurate estimate of the expected $\Delta U_{NP}$ ripple. Referring to simulation example of Fig 9, the threshold for $(I_o + I_{bA})$ * $f_c/f_o$ could have been set to 700, which would control the $\Delta U_{NP}$ ripple to about +/- 5 V or less. Now DPWM would still be selected for $f_o = 5$ Hz in case that $I_o = 200$ A and $f_c = 3$ kHz as $(I_o + I_{bA})$ * $f_c/f_o = 450 < 700$. Due to the more accurate estimate of the expected $\Delta U_{NP}$ ripple, the feasible DPWM operating area is larger.

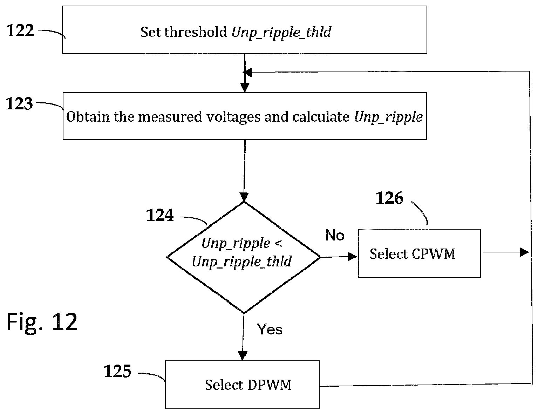

In embodiments, the unbalance metrics may be based on dc-link rail voltages of the ARCP inverter $U_1$, $U_2$, $U_{dc}$ and/or $U_{NP}$ measured over a predetermined interval. For example, a quantity *Unp_ripple* derived from the measured unbalance voltage $\Delta U_{NP}$ ripple, e.g., an average of peak-to-peak values of $\Delta U_{NP}$ or an average of max(abs($\Delta U_{NP}$)) across an appropriate interval. The interval may be at least 1/3 of the fundamental period $1/f_o$. In embodiments, the measured $\Delta U_{NP} = U_2 - U_1$, wherein $U_1$ and $U_2$ are measured voltages across the dc-link capacitors $C_{d1}$ and $C_{d2}$. In embodiments, instead

of $\Delta U_{NP} = U_2 - U_1$, other equivalent quantities based on measured voltages $U_1$, $U_2$, $U_{dc}$, can be used to obtain a quantity *Unp_ripple* reflecting the NP unbalance voltage $\Delta U_{NP}$ ripple, for example max($U_1/U_{dc}$, $U_2/U_{dc}$), etc. An exemplary operation of the modulation control 70 implementing a selection of the modulation technique based on the quantity *Unp_ripple* is now described with reference to Fig. 12. An inverter threshold parameter *Unp_ripple_thld* is set (step 122). The modulation control 70 obtains the measured voltages and calculates the *Unp_ripple* (step 123) and selects either CPWM or DPWM modulation in steps 124, 125, and 126 as follows:
**if** *Unp_ripple < Unp_ripple_thld* select DPWM **else** CPWM.

Referring to the simulation example illustrated in Fig. 9B, the threshold the threshold *Unp_ripple_thld* for max(abs($\Delta U_{NP}$)) could be set to 5 V.

In embodiments, the modulation control 70 is configured to start the ARCP inverter with the CPWM modulation from zero or low fundamental output frequency $f_o$ of the ARCP inverter.

In embodiments, the modulation control is configured to apply different metrics for selecting between the CPWM modulation and the DPWM modulation depending on whether the ARCP inverter is operating with the CPWM modulation or whether the ARCP inverter is operating with the DPWM modulation.

In embodiments, the modulation controller 70 may be configured to apply metrics based on the fundamental output frequency $f_o$ and/or the carrier frequency (e.g as in embodiments described regarding Figs. 10 and 11 above) to decide whether the CPWM modulation is maintained or the DPWM modulation is selected, when the ARCP inverter is operating with the CPWM modulation, at least upon starting up of the ARCP inverter, and the modulation controller 70 may be configured to apply metrics based on estimated or measured dc-link voltages $U_1$, $U_2$ and/or $U_{dc}$ (e.g., as in embodiments described regarding Fig. 12 above) to decide whether the DPWM modulation is maintained or the CPWM modulation is selected, when the ARCP inverter is operating with the DPWM modulation. For example, when the ARCP inverter is operating with the CPWM modulation, the applied unbalance metrics may include a fundamental output frequency $f_o$ of the ARCP inverter, a ratio of a switching frequency $f_c$ of the ARCP inverter to a fundamental output frequency $f_0$ of the ARCP inverter, and/or a measured or estimated output current $I_o$ of the ARCP inverter or a sum of the measured or estimated output current $I_o$ and a boosting current reference $I_{ba}$. When the ARCP inverter is operating with the DPWM modulation, the applied unbalance metrics based measured $U_1$, $U_2$, and $U_{dc}$ and proportional to or reflecting the voltage unbalance may include ($U_2 - U_1$), $U_1/U_{dc}$, $U_2/U_{dc}$, etc, for example.

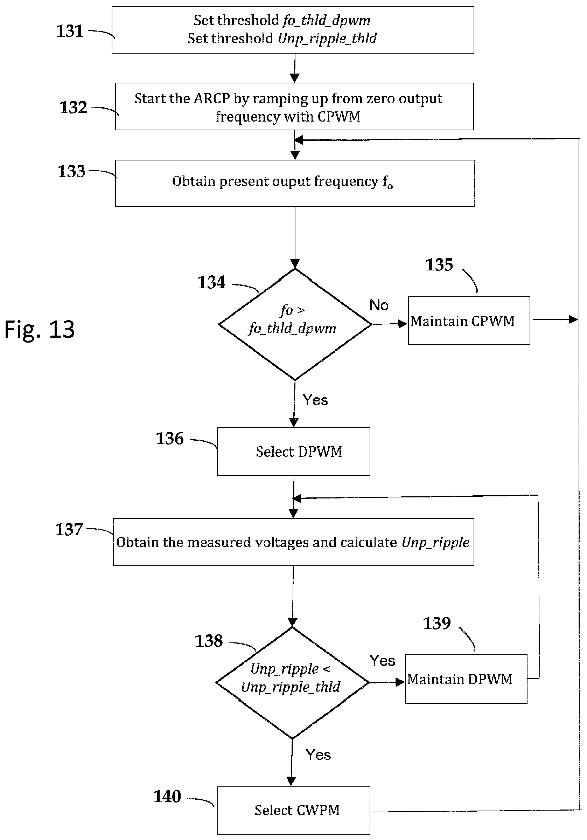

An exemplary operation of the modulation control 70 using different metrics for selecting between the CPWM modulation and the DPWM modulation depending on whether the ARCP inverter is operating with the CPWM modulation or whether the ARCP inverter is operating with the DPWM modulation, is now described with reference to Fig. 13. Inverter threshold parameters *fo_thld_dpwm* and *Unp_ripple_thld* are set (step 131). The modulation control 70 starts the ARCP inverter by ramping up the output frequency $f_o$ from a zero frequency to a desired output frequency (step 133). The modulation control 70 obtains the present inverter output frequency $f_o$ (step 133) and either maintains CPWM or selects DPWM modulation in steps 134, 135, and 136 as follows:
**if** *fo > fo_thld_dpwm* select DPWM **else** maintain CPWM.

When the ARCP inverter is operating with the DPWM modulation, the modulation control 70 obtains the measured voltages and calculates the *Unp_ripple* (step 137) and either maintains DPWM or selects CPWM modulation in steps 137, 138, 139 and 140 as follows:
**if** *Unp_ripple < Unp_ripple_thld* maintain DPWM **else** select CPWM.

When CPWM is selected in step 140, the procedure returns to step 133.

In embodiments, a PWM modulator, such as the modulator 82 illustrated in Fig. 3, is configured to selectively output either CPWM or DPWM signal or signals, such as the signal PWMA, PWMB and/or PMWC illustrated in Fig. 3, to an ARCP control, such as the ARCP control 84 illustrated in Fig.3, for the commutation of the ARCP inverter 100. No changes are needed in ARCP control and control functions 84, in the power sections 10A, 10B, and 10C, and in the dc-link 2, or in normal operation of the ARCP inverter otherwise. Thus, the dynamically selective CPWM or DPWM modulation according to embodiments of the invention is universally applicable to any type of ARCP inverter regardless the actual design, the actual configuration or the actual ARCP operation of the specific ARCP inverter.

In embodiments, the modulation control 70 is configured to select the modulation technique by commanding the space vector PWM modulator to apply first zero vector distributions to carry out the CPWM modulation and to apply appropriate different zero vector distribution to carry out the DPWM modulation in the ARCP inverter. In embodiments, the modulation control 70 is configured to select the modulation technique by selecting a reference wave of the PWM modulator to be a CPWM reference wave to carry out the CPWM modulation in the ARCP inverter and a DPWM reference wave to carry out the DPWM modulation in the ARCP inverter.

In embodiments, the modulation control 70 is configured to select either a CPWM reference wave or a DPWM reference wave as a reference wave input for a PWM modulator, such as the modulator 82 illustrated in Fig. 3, for respective generation and outputting of either CPWM or DPWM signal or signals, such as the signal PWMA, PWMB and/or PMWC illustrated in Fig. 3, to an ARCP control for the commutation of the ARCP inverter 100. Thus, the dynamically selective CPWM or DPWM modulation according to embodiments of the invention is readily applicable with no or minor changes in PWM modulators presently used for hard-switching topologies.

In embodiments, a DPWM reference wave 46 can be generated by adding the zero-sequence component 42 to the original (sinusoidal) reference wave 44, for example as illustrated in Fig. 5D.

The modulation control 70 may be implemented as a separate unit, or it may be integrated into other control devices of an ARCP inverter, such as the ARCP related control, or it may be part of a PWM modulator, etc. Alternatively, the modulation control 70 may be integrated to a higher-level control, such as a motor control 86.

The modulation control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

The description and the related figures are only intended to illustrate the principles of the present invention by means of examples. Various alternative embodiments, variations and changes are obvious to a person skilled in the art on the basis of this description. The present invention is not intended to be limited to the examples described herein but the invention may vary within the scope and spirit of the appended claims.

**Claims**

1. A control apparatus, comprising

   a modulator configured to carry out a commutation of an auxiliary resonant commutated pole (ARCP) inverter by a pulse width modulation (PWM) technique, wherein the modulator can use a Continuous PWM (CPWM) modulation and a Discontinuous PWM (DPWM) modulation for the commutation of the ARCP inverter, and a modulation control configured to dynamically select either the CPWM modulation or the DPWM modulation in a such a way that switching losses of the ARCP inverter are reduced while a failure of the commutation of the ARCP inverter due to a neutral point voltage unbalance of the ARCP inverter is avoided.

2. The control apparatus as claimed in claim 1, wherein the modulation control is configured to select the DPWM modulation, if the neutral point voltage unbalance resulting from the DPWM modulation is estimated to not cause a failure of the commutation of the ARCP inverter, and the modulation control is configured to select the CPWM modulation for the commutation, if the neutral point voltage unbalance resulting from the DPWM modulation is estimated to cause a failure of the commutation of the ARCP inverter.

3. The control apparatus as claimed in claim 1 or 2, wherein the modulation control is configured to select the DPWM modulation, if the neutral point voltage unbalance resulting from the DPWM modulation is estimated to be sufficiently low for a successful commutation, and the modulation control is configured to select the CPWM modulation for the commutation, if the neutral point voltage unbalance resulting from the DPWM modulation is estimated to be excessively high for a successful commutation.

4. The control apparatus as claimed in any one of the preceding claims, wherein

   the modulation control is configured to monitor one or more unbalance metrics directly or inversely proportional to a neutral point voltage unbalance of the ARCP inverter, preferably to a neutral point unbalance voltage ripple of the ARCP inverter, and
   the modulation control is configured to compare the monitored unbalance metrics with one or more threshold parameters, preferably with hysteresis, and to dynamically select the CPWM modulation or the DWPM modulation based on a result of the comparison.

5. The control apparatus as claimed in claim 4, wherein the unbalance metrics includes a fundamental output frequency of the ARCP inverter, and wherein the modulation control is configured to dynamically select the DPWM modulation for the commutation, when the fundamental output frequency of the ARCP inverter is higher than the threshold parameter, and the modulation control is configured to select the CPWM modulation for the commutation when the output frequency of the ARCP inverter is lower than the threshold parameter, wherein the threshold parameter represents an absolute frequency value or a percentage of a frequency range.

6. The control apparatus as claimed in claim 4, wherein the unbalance metrics includes a ratio $f_c/f_o$, wherein $f_c$ is a carrier frequency of the ARCP inverter, $f_o$ is a fundamental output frequency of the ARCP inverter.

7. The control apparatus as claimed in any one of claims 5-6, wherein the unbalance metrics further includes a measured or estimated output current of the ARCP inverter or a sum of the measured or estimated output current and a boosting current reference.

8. The control apparatus as claimed in any one of claims 4-7, wherein the unbalance metrics include a neutral point unbalance voltage ripple derived from dc-link rail voltages of the ARCP inverter measured over a predetermined measurement interval.

9. The control apparatus as claimed in any one of claims 4-8, wherein the modulation control is configured to accelerate a motor load with the CPWM modulation from a zero or low fundamental output frequency of the ARCP inverter.

10. The control apparatus as claimed in any one of claims 4-9, wherein the modulation control is configured to apply different unbalance metrics for selecting between the CPWM modulation and the DPWM modulation depending on whether the ARCP inverter is operating with the CPWM modulation or whether the ARCP inverter is operating with the DPWM modulation.

11. The control apparatus as claimed in claim 10, wherein,

the modulation controller is configured to apply unbalance metrics based on a fundamental output frequency and/or a carrier frequency to decide whether the CPWM modulation is maintained or the DPWM modulation is selected, when the ARCP inverter is operating with the CPWM modulation, at least upon accelerating a motor load from standstill, and
the modulation controller is configured to apply unbalance metrics based on neutral point unbalance voltage ripple to decide whether the DPWM modulation is maintained or the CPWM modulation is selected, when the ARCP inverter is operating with the DPWM modulation.

12. The control apparatus as claimed in claim 11, wherein

when the ARCP inverter is operating with the CPWM modulation, the modulation control is configured to monitor the unbalance metrics including a fundamental output frequency $f_o$ of the ARCP inverter, a ratio of a carrier frequency $f_c$ of the ARCP inverter to a fundamental output frequency $f_o$ of the ARCP inverter, and/or a measured or estimated output current of the ARCP inverter or a sum of the measured or estimated output current and a boosting current reference, and to select the DPWM modulation, if the neutral point voltage unbalance resulting from the DPWM modulation is estimated to be sufficiently low for a successful commutation, and maintain the CPWM modulation otherwise, and
when ARCP inverter is operating with the DPWM modulation, the modulation control is configured to monitor a neutral point unbalance voltage ripple derived from dc-link rail voltages of the ARCP inverter measured over a predetermined measurement interval, and to maintain the selection of the DPWM modulation, if the neutral point unbalance voltage ripple is lower than a threshold, and to select the CPWM modulation otherwise.

13. The control apparatus as claimed in any one of claims 1-12, wherein the modulator is configured to space vector modulation (SVM).

14. The control apparatus as claimed in any one of claims 1-13, wherein the modulator is configured to use carrier-based modulation.

15. An auxiliary resonant commutated pole (ARCP) inverter device, comprising:

the control apparatus as claimed in any one of claims 1-14,
a dc-link having a first DC rail and a second DC rail,
a series connection of at least two dc-link capacitances between the two rails of the dc-link, which series connection through a midpoint, called a neutral point (NP) of the dc-link, is divided into two equal parts,
one or more inverter phases, each of said inverter phases including:
a series connection of at least two main switching devices between a first DC voltage rail and a second DC voltage rail to alternatively connect the first and second dc-link rails to a phase output by the PWM modulation from the control apparatus,
one or more resonant capacitors connected in such manner that at least one terminal of the one or more resonant capacitors is operationally connected to one of the dc-link rails or the neutral point and the other terminal is operationally connected to the phase output,
a series connection of at least two dc-link capacitances between the two rails of the dc-link, which series connection through a midpoint, called a neutral point (NP) of the dc-link, is divided into two equal parts,

a series connection of a resonant inductance and at least one bi-directional auxiliary switch between said phase output and said neutral point.

Fig. 1A

Fig. 1B

Fig. 2A

Fig. 2B

Fig. 2C

Fig. 2D

Fig. 2E

Fig. 2F

**Fig. 3A**

**Fig. 3B**

Fig. 4A

Fig. 4B

Fig. 4C

SPWM

Fig. 5A

SVM

Fig. 5B

60° DPWM

Fig. 5C

Fig. 5D

44

42

46

Fig. 6A

Fig. 6B

Fig. 7A

Fig. 7B

Fig. 8

Fig. 9A

Fig. 9B

102 — Set threshold *fo_thld_dpwm*

103 — Obtain present ouput frequency $f_o$

104 — $fo > fo\_thld\_dpwm$

No → 106 Select CPWM

Yes

105 — Select DPWM

**Fig. 10**

112 — Set threshold fc_*fo_thld*

113 — Obtain present ouput frequency $f_o$ and carrier frequency fc. Calculate $f_c/f_o$

114 — $fc/fo < fc\_fo\_thld$

No → 116 Select CPWM

Yes

115 — Select DPWM

**Fig. 11**

**122** — Set threshold *Unp_ripple_thld*

**123** — Obtain the measured voltages and calculate *Unp_ripple*

**124** — *Unp_ripple < Unp_ripple_thld*

No → **126** — Select CPWM

Yes ↓

**125** — Select DPWM

Fig. 12

**Fig. 13**

131 — Set threshold *fo_thld_dpwm*
Set threshold *Unp_ripple_thld*

132 — Start the ARCP by ramping up from zero output frequency with CPWM

133 — Obtain present ouput frequency $f_o$

134 — *fo > fo_thld_dpwm*

No → 135 Maintain CPWM

Yes

136 — Select DPWM

137 — Obtain the measured voltages and calculate *Unp_ripple*

138 — *Unp_ripple < Unp_ripple_thld*

Yes → 139 Maintain DPWM

Yes

140 — Select CWPM

Europäisches
Patentamt

European
Patent Office

Office européen
des brevets

# EUROPEAN SEARCH REPORT

Application Number

EP 22 21 0534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RALPH TEICHMANN ET AL: "ARCP Soft-Switching Techniquein Matrix Converters", IEEE TRANSACTIONS ON INDUSTRIAL ELECTRONICS, IEEE SERVICE CENTER, PISCATAWAY, NJ, USA, vol. 49, no. 2, 1 April 2002 (2002-04-01), XP011073701, ISSN: 0278-0046 | 1-3, 13-15 | INV. H02M7/5395 H02M1/00 H02M7/487 |
| A | * Section III. ARCP-MC TOPOLOGIES; Subsection III. A. ARCP-MC I; tables I, II * | 4-12 | |
| | ----- | | |
| Y | MUKHERJEE SARBANI ET AL: "A Flexible Discontinuous Modulation Scheme With Hybrid Capacitor Voltage Balancing Strategy for Three-Level NPC Traction Inverter", IEEE TRANSACTIONS ON INDUSTRIAL ELECTRONICS, IEEE SERVICE CENTER, PISCATAWAY, NJ, USA, vol. 66, no. 5, 1 May 2019 (2019-05-01), pages 3333-3343, XP011695264, ISSN: 0278-0046, DOI: 10.1109/TIE.2018.2851967 [retrieved on 2018-12-31] | 1-3, 13-15 | TECHNICAL FIELDS SEARCHED (IPC) H02M |
| A | * Subsection III. B. Steady-State NP Voltage Oscillations; figures 1-8 * | 4-12 | |
| | ----- | | |
| | -/-- | | |

The present search report has been drawn up for all claims

| Place of search | Date of completion of the search | Examiner |
|---|---|---|
| The Hague | 21 April 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

     .................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 21 0534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE ABIR ET AL: "An improved zero voltage switching SVPWM for three phase inverter", 2017 11TH IEEE INTERNATIONAL CONFERENCE ON COMPATIBILITY, POWER ELECTRONICS AND POWER ENGINEERING (CPE-POWERENG), IEEE, 4 April 2017 (2017-04-04), pages 169-174, XP033090248, DOI: 10.1109/CPE.2017.7915164 [retrieved on 2017-04-28] * Section I. INTRODUCTION; figure 1 * | 1-15 | |
| A | SONG B-M ET AL: "A MULTILEVEL SOFT-SWITCHING INVERTER WITH INDUCTOR COUPLING", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, vol. CONF. 35, 8 October 2000 (2000-10-08), pages 2100-2107, XP001042608, DOI: 10.1109/IAS.2000.883116 ISBN: 978-0-7803-6402-8 * Subsection II. E; Subsection III. A. Clamping Voltage Stabilization; Subsection III. B. DC Link Voltage Stabilization; figure 1 * | 1-15 | |

-/--

**TECHNICAL FIELDS SEARCHED (IPC)**

The present search report has been drawn up for all claims

| Place of search | Date of completion of the search | Examiner |
|---|---|---|
| The Hague | 21 April 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 21 0534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TANG FEN ET AL: "Review and re-evaluation of modulation techniques for neutral-point-clamped inverters with high-order filters", IET POWER ELECTRONICS, IET, UK, vol. 12, no. 6, 29 May 2019 (2019-05-29), pages 1307-1320, XP006083999, ISSN: 1755-4535, DOI: 10.1049/IET-PEL.2018.6096 * Section 3 Modulation assessment with consideration of filter resonances; figures 1,3,6,7; table 1 * | 1-15 | |
| A | LIU FANGCHENG ET AL: "An adaptive Discontinuous Pulse Width Modulation (DPWM) method for three phase inverter", 2017 IEEE APPLIED POWER ELECTRONICS CONFERENCE AND EXPOSITION (APEC), IEEE, 26 March 2017 (2017-03-26), pages 1467-1472, XP033098419, DOI: 10.1109/APEC.2017.7930892 [retrieved on 2017-05-17] * Section V. SIMULATION VALIDATIONS:; figures 1, 2, 4, 7, 8 * | 1-15 | |

TECHNICAL FIELDS
SEARCHED (IPC)

The present search report has been drawn up for all claims

| Place of search | Date of completion of the search | Examiner |
|---|---|---|
| The Hague | 21 April 2023 | Kanelis, Konstantin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5047913 A,  R. W. De Doncker
- EP 1407533 B1
- US 6205040 B1
- US 6278626 B1
- EP 3923460 A1

**Non-patent literature cited in the description**

- The auxiliary resonant commutated pole converter. *IEEE-IAS Conference Proceedings,* 1990, 1228-35